Europäisches Patentamt

European Patent Office

Office européen des brevets

(19)

(11) Veröffentlichungsnummer: **0 372 283**

**A2**

(12) **EUROPÄISCHE PATENTANMELDUNG**

(21) Anmeldenummer: **89121388.6**

(22) Anmeldetag: **18.11.89**

(51) Int. Cl.5: **H04L 12/56**

(30) Priorität: **02.12.88 DE 3840688**

(43) Veröffentlichungstag der Anmeldung:
**13.06.90 Patentblatt 90/24**

(84) Benannte Vertragsstaaten:
**AT BE CH DE ES FR GB IT LI NL SE**

(71) Anmelder: **Standard Elektrik Lorenz
Aktiengesellschaft
Lorenzstrasse 10
D-7000 Stuttgart 40(DE)**

(84) **DE**

Anmelder: **ALCATEL N.V.
Strawinskylaan 341 (World Trade Center)
NL-1077 XX Amsterdam(NL)**

(84) **BE CH ES FR GB IT LI NL SE AT**

(72) Erfinder: **Böttle, Dietrich
Buchenweg 14
D-7335 Salach(DE)**
Erfinder: **Wahl, Stefan
Hirschstrasse 29
D-7251 Hemmingen(DE)**

(74) Vertreter: **Brose, Gerhard et al
Standard Elektrik Lorenz AG Patent- und
Lizenzwesen Postfach 30 09 29
D-7000 Stuttgart 30(DE)**

(54) **Paketvermittlungsstelle und Eingangs-Umwandlungseinheit hierfür.**

(57) Um den Verlust von Datenpaketen zu reduzieren, ist es bekannt, Pufferspeicher, Prioritätsschaltungen und Einrichtungen zur Verkehrsmessung vorzusehen. All dies muß in jeder Vermittlungsstufe, meist einmal pro Eingangsleitung, vorhanden sein.

Dieser hohe Aufwand innerhalb des Koppelnetzes soll reduziert werden.

Gemäß der Erfindung werden die ankommenden Paketströme in synchrone Zeitmultiplexdatenströme mit fester Zuordnung zwischen Zeitkanälen und einzelnen Verbindungen umgewandelt. Die Vermittlung kann dann in synchroner Zeitmultiplextechnik erfolgen. Das Koppelnetz ist einfacher aufgebaut, muß aber etwas überdimensioniert werden.

## Paketvermittlungsstelle und Eingangs-Umwandlungseinheit hierfür

Die Erfindung betrifft eine Paketvermittlungsstelle nach dem Oberbegriff von Anspruch 1 und eine Eingangs-Umwandlungseinheit hierfür.

Für die Zukunft soll die Übermittlung von Sprache, Text, Bild und Daten nicht mehr in synchroner Zeitmultiplextechnik erfolgen, weil diese im Hinblick auf die verschiedenartigsten Dienste nicht flexibel genug ist. Es soll vielmehr eine schnelle Paketübermittlungstechnik verwendet werden.

Die Paketübermittlungstechnik bedient sich in der Regel virtueller Verbindungen, bei denen für jede Verbindung bei der Verbindungsaufnahme ein Übertragungsweg festgelegt, aber nicht durchgeschaltet wird. Jeder Abschnitt des Übertragungswegs kann auch anderen Verbindungen zugeteilt werden. Der Übertragungsweg wird dann für jedes Paket abschnittswei se durchgeschaltet und anschließend wiederfreigegeben. Dabei kann es zu Kollisionen und, in deren Folge, zu einem Paketverlust kommen.

Um den Verlust von Datenpaketen zu reduzieren, ist es bekannt, Pufferspeicher und Prioritätsschaltungen vorzusehen. Weiter wurde vorgeschlagen, Einrichtungen zur Verkehrsmessung vorzusehen. All dies muß in jeder Vermittlungsstufe, meist einmal pro Eingangsleitung, vorhanden sein.

Der Erfindung liegt die Aufgabe zugrunde, bei einer Paketvermittlungsstelle den hohen Aufwand innerhalb des Koppelnetzes zu reduzieren.

Diese Aufgabe wird gelöst durch eine Paketvermittlungsstelle nach der Lehre des Anspruchs 1.

Anspruch 4 gibt eine dafür geeignete Eingangs-Umwandlungseinheit an. Vorteilhafte Weiterbildungen sind in den Ansprüchen 2 und 3 sowie 5 bis 8 enthalten.

Gemäß der Erfindung werden die ankommenden Paketdatenströme in synchrone Zeitmultiplexdatenströme mit fester Zuordnung zwischen Zeitkanälen und einzelnen Verbindungen umgewandelt. Die Vermittlung erfolgt dann vorzugsweise in synchroner Zeitmultiplextechnik. Aber auch bei Vermittlung in asynchroner Technik ist die erfindungsgemäße Verwendung von Eingangs-Umwandlungseinheiten von Vorteil, da diese den Datenstrom glätten und deshalb den Aufwand, insbesondere an Pufferspeichern, senken.

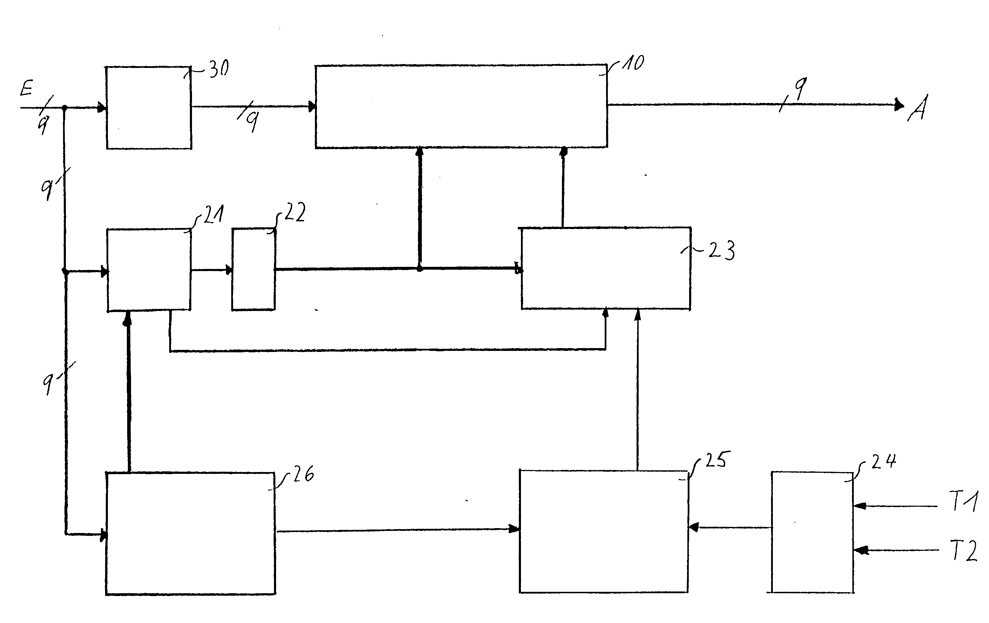

Im folgenden wird die Erfindung anhand eines Ausführungsbeispiels unter Zuhilfenahme der beiliegenden Zeichnung weiter erläutert.

Die Zeichnung zeigt eine erfindungsgemäße Eingangs-Umwandlungseinheit.

Die Eingangs-Umwandlungseinheit wird der Einfachheit wegen so beschrieben, als würden sämtliche zu einem Paket gehörigen Bits (q in Figur) zeitgleich und parallel verarbeitet werden.

Wenn ein Paket, wie für die Zukunft zu erwarten, aus etwa 40 Oktetten zu je 8 Bits, d.h. aus etwa 320 Bits besteht, dann ist eine parallele Verarbeitung praktisch ausgeschlossen. Für den Fachmann ist es aber kein Problem, den Datenstrom ganz oder teilweise seriell zu verarbeiten. Auch die erforderlichen Takte, Schreib- und Leseimpulse wurden weitgehend weggelassen, da sie sich für den Fachmann ohne weiteres ergeben. Anstatt die Bits oder Oktette eines Pakets nacheinander auszugeben und dann die Bits oder Oktette des nächsten Pakets auszugeben, kann es sinnvoll sein, den Ausgangszeitrahmen in Unterrahmen aufzuteilen und beispielsweise zunächst der Reihe nach jeweils das erste Oktett aller Pakete, dann das zweite Oktett aller Pakete usw. auszugeben. Für nähere Einzelheiten hierzu wird auf die nicht vorveröffentlichten Patentanmeldungen P 37 42 939.6 und P 37 42 941.8 (interne Aktenzeichen H - Weik 1 bzw. G. Eilenberger et al 1-3-1) verwiesen.

Die gezeigte Eingangs-Umwandlungseinheit besteht aus einem Paketspeicher 10, einer Steuereinheit 21 ... 26 und einem Pufferspeicher 30. Die Steuereinheit weist eine Eingangstabelle 21, einen Eingabezähler 22, einen Zuordnungsspeicher 23, einen Ausgabezähler 24, eine Ausgangstabelle 25 und eine Zuordnungsschaltung 26 auf.

Der Paketspeicher 10 ist so bemessen, daß er so viele Pakete zwischenspeichern kann, wie für die vorgesehene Umwandlung erforderlich. Die Umwandlung des asynchronen Datenstroms in einen synchronen Datenstrom bringt auch eine Glättung mit sich. Der erforderliche Aufwand hängt davon ab, wie ungleichmäßig der Eingangsdatenstrom sein darf, um noch ausgeglichen zu werden. Dies muß in irgendeiner Weise vom Betreiber der Anlage vorgegeben werden, wobei sich der Betreiber an nationale oder internationale Normen halten wird. Die Normung auf diesem Gebiet ist noch im Gange. Ziemlich fest steht derzeit, daß der Paketdatenstrom eine Rahmenstruktur mit einer Rahmenlänge von 125 Mikrosekunden aufweisen wird. Pro Rahmen werden dann etwa 70 Pakete mit je etwa 40 Oktetten übertragen. Es ist auch ziemlich sicher, daß beim Aufbau einer Verbindung in irgendeiner Weise die benötigte Kapazität anzugeben ist. Dies kann erfolgen durch Angabe einer maximalen Anzahl von Paketen innerhalb einer bestimmten Anzahl von Rahmen. Es kann auch die Angabe einer Durchschnittszahl verlangt werden. Die Kapazitätsangabe sollte sich immer auf einen Zeitraum beziehen, der gleich einer Rahmenlänge oder einem ganzen Vielfachen davon ist.

Aber selbst dann, wenn von außen keine Rahmenstruktur vorgegeben wird, kann durch die

2

Eingangs-Umwandlungseinheit ein Rahmen gebildet und der Datenstrom gleichmäßiger gemacht werden.

Der Paketspeicher 10 muß mindestens so groß sein, daß er die in einem Rahmen enthaltenen Pakete zwischenspeichern kann. Ist die Kapazitätsangabe so gefordert, daß die maximale Anzahl von Paketen innerhalb eines Rahmens anzugeben ist, dann genügt es auch, einen Rahmen zwischenzuspeichern. Ist die maximale Anzahl innerhalb eines größeren Zeitraums oder eine Durchschnittszahl anzugeben, so ist der Paketspeicher entsprechend größer zu wählen, beispielsweise für zwei oder vier komplette Rahmen. Es ist nicht zwingend, den Paketspeicher für ganze Vielfache eines Rahmens auszulegen. Kann davon ausgegangen werden, daß die Kapazität der Eingangsleitung nur teilweise ausgenützt wird, so kann dies bei der Bemessung des Paketspeichers 10 berücksichtigt werden.

Die am Eingang E der Eingangs-Umwandlungseinheit ankommenden Pakete werden in fortlaufender Reihenfolge in den Paketspeicher 10 eingeschrieben. Hierzu zählt der Eingabezähler 22 die Adressen der Speicherplätze des Paketspeichers 10 kontinuierlich durch . Pakete ohne weiterzugebende Information, z.B. Leerpakete, Sychronisationspakete und ausschließlich für die Zuordnungsschaltung 26 bestimmte Steuerpakete werden nicht mit abgespeichert. Hierzu wertet die Eingangstabelle 21 die in den Paketen enthaltenen Paketköpfe aus und veranlaßt bei jedem neuen einzuschreibenden Paket den Eingabezähler 22 zum Weiterzählen.

Die Eingangstabelle 21 erkennt anhand der Paketköpfe, zu welcher Verbindung die Pakete jeweils gehören. Jeder Verbindung ist eine Verbindungsnummer zugeordnet, die von der Eingangstabelle 21 an den Zuordnungsspeicher 23 weitergegeben wird. Gleichzeitig wird dem Zuordnungsspeicher 23 vom Eingabezähler 22 die laufende Adresse für den Paketspeicher angegeben.

Im Zuordnungsspeicher 23 wird dann abgespeichert, in welchen Speicherplätzen des Paketspeichers 10 die zu einer bestimmten Verbindung gehörigen Pakete abgespeichert sind.

Der Zuordnungsspeicher 23 enthält vorzugsweise eine Mehrzahl von FiFo-Speichern mit zugehörigen Zählern. Jeder Verbindung ist ein FiFo-Speicher mit zugehörigem Zähler zugeordnet. Beim Einschreiben eines Pakets in den Paketspeicher 10 wird durch die von der Eingangstabelle 21 angezeigte Verbindungsnummer der zugehörige FiFo-Speicher ausgewählt und in diesem die Adresse des Speicherplatzes eingeschrieben, in den das Paket eingeschrieben wird. Jeder FiFo-Speicher speichert also der Reihe nach die Adressen derjenigen Speicherplätze ab, in die die zur selben Verbindung gehörigen Pakete abgespeichert sind.

Der zugehörige Zähler gibt dann an, wieviele zusammengehörigen Pakete noch gespeichert sind.

Der Zuordnungsspeicher 23 muß soviele FiFo-Speicher enthalten, wie maximal Verbindungen zugelassen sind. Da erfindungsgemäß zwischen den Zeitkanälen auf der Ausgangsleitung A und den einzelnen Verbindungen eine feste Zuordnung bestehen soll, sind maximal so viele FiFo-Speicher erforderlich, wie Zeitkanäle auf der Ausgangsleitung sind. Da der Sinn der schnellen Paketvermittlung der ist, eine größere Flexibilität hinsichtlich der Übertragungskapazität zu erreichen, muß davon ausgegangen werden, daß immer ein bestimmter Anteil der Verbindungen mehr Kapazität beansprucht, als in einem Zeitkanal enthalten ist . Für die Praxis wird es ausreichen, wenn nicht ganz so viele FiFo-Speicher vorhanden sind wie Zeitkanäle. Die Frage, wieviele Speicherplätze ein FiFo-Speicher aufweisen muß, hängt von der Größe des Paketspeichers 10 und davon ab, wie ungleichmäßig die Pakete am Eingang E ankommen. Wenn der Paketspeicher 10 etwa einen Rahmen speichern kann, dürften etwa acht Speicherplätze für je eine Adresse pro FiFo-Speicher ausreichen. Bei Verbindungen mit höherer Kapazität sind zwar mehr Adressen zwischenzuspeichern, diese werden aber auch schneller wieder frei.

Das Auslesen der Pakete aus dem Paketspeicher 10 erfolgt nun wie folgt:

Der Ausgabezähler 24 zählt die Zeitkanäle auf der Ausgangsleitung A durch . Er wird hierzu von einem Takt T1 rahmensynchronisiert und von einem Takt T2 für jedes Paket weitergezählt . Der Ausgabezähler 24 adressiert die Ausgangstabelle 25, die für jeden Ausgangskanal den zugeordneten FiFo-Speicher des Zuordnungsspeichers 23 kennt und diesen anwählt. Dort wird dann wieder die Adresse des Speicherplatzes im Paketspeicher 10 entnommen, in dem das nächste Paket für den angewählten Zeitkanal enthalten ist, das dann ausgelesen wird.

Ist nun in der Ausgangstabelle 25 für zwei oder mehr Zeitkanäle die Nummer desselben FiFo-Speichers enthalten, so bedeutet dies die Zuordnung dieser Zeitkanäle zu ein- und derselben Verbindung.

Andererseits kann in der Eingangstabelle 21 für zwei oder mehr verschiedene Paketköpfe die Nummer desselben FiFo-Speichers enthalten sein. Dann wird mehreren Verbindungen derselbe Zeitkanal zugeordnet . Dies ist dann sinnvoll, wenn mehrere Verbindungen innerhalb der Vermittlungsstelle dasselbe Ziel haben und sie insgesamt eine geringe Kapazität beanspruchen.

Die Vornahme der Zuordnungen innerhalb der Eingangstabelle 21 und der Ausgangstabelle 25 erfolgt von der Zuordnungsschaltung 26 aus. Diese erhält ihre Steuerbefehle über Steuerpakete, die im Eingangsdatenstrom enthalten sind.

Der Eingangsdatenstrom enthält nicht ständig Nutzinformation. Außerdem kann, um mehr Wege zur Verfügung zu haben, der Ausgangsdatenstrom eine größere Kapazität aufweisen als der Eingangsdatenstrom. Immer dann, wenn für einen Zeitkanal kein Paket mehr im Paketspeicher 10 enthalten ist, muß ein Leerpaket ausgegeben werden. Dieses kann in einem separaten Speicher enthalten sein oder in einem Speicherplatz des Paketspeichers 10, der vom Eingabezähler 22 nicht erreicht wird. Immer dann, wenn einem Zeitkanal entweder kein FiFo-Speicher zugeordnet ist oder dessen Zähler anzeigt, daß er leer ist, muß ein Leerpaket ausgegeben werden. Der Inhalt des Leerpakets kann entweder fest verdrahtet sein, wobei es genügt, diejenigen Bitpositionen zu verdrahten, die ein Paket als Leerpaket ausweisen, oder es kann, beispielsweise beim Einschalten oder in vorgegebenen Abständen, in einen Speicherplatz des Paketspeichers 10 eingeschrieben werden.

Der Pufferspeicher 30 dient dazu, den Eingangsdatenstrom so zu verzögern, daß er dann am Paketspeicher 10 anliegt, wenn dieser von der Eingangstabelle 21 und dem Eingabezähler 22 richtig angesteuert ist.

## Ansprüche

1. Paketvermittlungsstelle mit Eingangsleitungen, über die in beliebiger Reihenfolge untereinander gleich lange Pakete ankommen, die verschiedenen Verbindungen angehören,
**dadurch gekennzeichnet**, daß sie Eingangs-Umwandlungseinheiten aufweist, die die ankommenden Pakete derart umsortieren, daß sich jeweils ein Eingangsdatenstrom ergibt, bei dem Häufungen von zu einer bestimmten Verbindung gehörenden Paketen (Bursts) aufgelöst werden.

2. Paketvermittlungsstelle nach Anspruch 1, dadurch gekennzeichnet, daß die Eingangs-Umwandlungseinheiten die ankommenden Pakete derart umsortieren, daß sich ein Zeitmultiplexsignal ergibt, bei dem eine feste Zuordnung zwischen den Zeitkanälen und den zu einer bestimmten Verbindung gehörenden Paketen vorliegt.

3. Paketvermittlungsstelle nach Anspruch 2, dadurch gekennzeichnet, daß sie eine Zeitmultiplex-Vermittlungseinrichtung für die Durchschaltevermittlung der umgewandelten Eingangsdatenströme aufweist.

4. Eingangs-Umwandlungseinheit zum Einfügen in eine Eingangsleitung der Paketvermittlungsstelle nach Anspruch 2 oder 3,
**dadurch gekennzeichnet,** daß sie einen Speicher (10) und eine Steuereinheit (21 ... 26) aufweist, daß sämtliche ankommenden Pakete, gesteuert von der Steuereinheit (21 ... 26), zunächst in den Speicher (10) eingeschrieben werden und daß die Pakete derart wieder aus dem Speicher (10) ausgelesen werden, daß sich ein Zeitmultiplexsignal ergibt, bei dem eine feste Zuordnung zwischen den Zeitkanälen und den zu einer bestimmten Verbindung gehörenden Paketen vorliegt.

5. Eingangs-Umwandlungseinheit nach Anspruch 4,
dadurch gekennzeichnet, daß die Anzahl der Zeitkanäle, die einer Verbindung zugeordnet werden, von der maximalen Anzahl innerhalb einer bestimmten Zeiteinheit bei dieser Verbindung anfallender Pakete abhängt.

6. Eingangs-Umwandlungseinheit nach Anspruch 4,
dadurch gekennzeichnet, daß die Anzahl der Zeitkanäle, die einer Verbindung zugeordnet werden, von der durchschnittlichen Anzahl innerhalb einer bestimmten Zeiteinheit bei dieser Verbindung anfallender Pakete abhängt.

7. Eingangs-Umwandlungseinheit nach Anspruch 5 oder 6,
dadurch gekennzeichnet, daß die Rahmenlänge des Zeitmultiplexsignals zu der bestimmten Zeiteinheit in einem natürlichen Verhältnis steht.

8. Eingangs-Umwandlungseinheit nach einem der Ansprüche 4 bis 7,
dadurch gekennzeichnet, daß einem Zeitkanal die Pakete mehrerer Verbindungen zugeordnet werden, wenn sie für denselben Ausgang der Paketvermittlungsstelle bestimmt sind und die Kapazität des Zeitkanals ausreicht.

EP 0 372 283 A2

P 38 40 688.8

D. Böttle - S. Wahl  13-1